# EUROPEAN PATENT APPLICATION

(11) **EP 4 509 431 A1**
(43) Date of publication of application: **19.02.2025**
(21) Application number: 23191523.2
(22) Date of filing: 15.08.2023
(51) Int. Cl.: B65D 85/804

(54) **ECOLOGICAL COFFEE PACKAGE, IN PARTICULAR COFFEE CAPSULE**

(71) Applicant: B&T Entwicklungs- und Vermarktungsgesellschaft mbH, 22297 Hamburg (DE)
(72) Inventor: DÖHMEN, Ben, 20144 Hamburg (DE)
(74) Representative: Frei Patent Attorneys

(57) **Abstract**

The **packaging** (1) for packaging an **extraction material** for preparation of a beverage from the extraction material and an extraction liquid comprises a **first part** (1a; 1b) which comprises a **wall** (w, w') of the packaging (1). The wall (w, w') comprising a **composite material** produced in a **pulp molding process** and comprises
- a **fibrous material**; and
- a **water-soluble polymer material**.

The packaging (1) can be **biodegradable** and in particular **compostable** and/or can be **recyclable** and more particularly recyclable in wastepaper recycling. The packaging (1) can be a portion packaging (1).

## Description

The invention relates to packagings for extraction material from which beverages can be prepared, such as to packagings for coffee, e.g., for coffee beans or for ground coffee. The packagings can, more particularly be portion packagings. Thus, the invention also relates to the preparation of beverages or the like from an extraction material, for example ground coffee, contained in a portion packaging (for example a coffee capsule). Corresponding beverage preparation machines for preparing beverages or the like from a portion package with a portion packaging (for example a capsule) and with an extraction material (for example coffee, more specifically ground coffee) which is contained in the portion package are known in the art. More specifically, the invention relates to packages and packagings, e.g., to said portion packages and portion packagings, and to ways of manufacturing these. And it also relates to other packagings such as to packagings for portion packagings. The invention relates to methods, uses and apparatuses according to the opening clauses of the claims.

Beverage preparation machines for preparing beverages or the like from an extraction material present in a portion packaging are known, including but not limited to, as coffee or espresso machines. Due to the extraction process for the preparation of the beverage, they can also be referred to as extraction devices. In many corresponding systems, the portion packages are embodied as capsules (portion capsules), in which the extraction material, e.g., ground coffee, is sealed, e.g., in an airtight manner. For the extraction, the capsule is pierced, for example on two opposite sides. An extraction liquid - usually hot water - is then introduced on the first side (injector side). On the second side (discharge side or extractor side), the extraction product is discharged from the capsule. This is done in a so-called brewing module. Such a module comprises a brewing chamber in which the capsule is accommodated. Depending on the beverage to be prepared and on the system, quite considerable pressure must be present inside the capsule during the brewing process. As an alternative to systems in which the portion capsule is pierced, there are also systems with capsules that are already provided with a perforation which, for example, is covered by a protective film that is removed or dissolved before the brewing process.

Particularly popular are brewing modules in which the capsule is inserted and the brewing chamber is closed, for example, by means of an operating lever or by means of a motor, wherein when the brewing chamber is opened again after the brewing process, the capsule is automatically removed from the brewing chamber and ejected into a capsule container. Such brewing modules with automatic capsule ejection are usually designed as horizontal brewing modules, i.e. the capsule is inserted from above, the brewing chamber is closed by a horizontal relative movement of two brewing module parts (injector and discharge unit), the brewing liquid flows primarily horizontally, and the capsule container is embodied below the brewing chamber.

Portion packagings made of various polymers and/or of aluminium are known and help to achieve a long shelf life, e.g., by providing a good oxygen barrier protecting the extraction material from exposure to oxygen.

In view of environmental and sustainability considerations, it is desirable to use portion packagings which comprise, preferably predominantly, a biodegradable material, e.g., a compostable material. And/or it would be desirable if the portion packagings would comprise, preferably predominantly, a recycled material. And/or it would be desirable if the portion packagings would be recyclable.

However, it is a challenge to provide corresponding materials that have suitable properties. Such suitable properties for a packaging and in particular for a portion packaging include the provision of an oxygen transmission barrier and optionally also the provision of a water vapor and/or humidity barrier. In other words, the packaging should exhibit a low oxygen transmission rate (OTR) and optionally also a low water vapor transmission rate (WVTR; sometimes referred to as humidity transmission rate or as moisture vapor transmission rate).

This can apply not only to portion packagings, but also to other packagings for such extraction materials, e.g, coffee. For example, it can apply to packagings for portion packages. Namely if such portion packages do not include a sufficient protection for the enclosed extraction material (e.g., against oxygen), it can be useful to package these portion packages, e.g., two or more of them, in a packaging which does provide further protection, e.g., against oxygen. Indeed, recently, coffee portion packagings have been released which are considered particularly ecological, but due to shortcomings regarding the protection, e.g., against oxygen, provided by those portion packagings, they are sold in a packaging (containing a number of those portion packagings), and that packaging comprises a polymer foil for additional protection.

Even though we herein mostly describe portion packagings, the invention more generally relates to any kind of packaging for extraction materials such as coffee, i.e., e.g., also to packagings for containing portion packages containing an extraction material for preparation of a beverage from the extraction material and an extraction liquid. Consequently, the invention also generally relates to any kind of package containing an extraction material such as coffee, i.e., e.g., the invention also relates to packages containing portion packages, the portion packages containing an extraction material for preparation of a beverage from the extraction material and an extraction liquid.

Back to portion packagings, one could think of portion packagings comprising **molded pulp** (also referred to as molded fiber), for environmental reasons, because molded pulp is can be a **recylcled** material and can be **biodegradable** and even **compostable**. And for ensuring an **oxygen transmission barrier** and/or a **water vapor and/or humidity barrier**, a polymer layer could be coated onto the molded pulp, e.g., by spraying or by laminating. However, this would mean that the manufacture of the portion packaging comprises at least two consecutive processes: the pulp molding and then, the coating. Accordingly, the manufacturing process would be complex and time-consuming and, consequently also expensive.

Therefore, a manufacturing method is proposed which is simple and/or time-saving, while still providing suitable properties.

Therefore, one object of the invention is to create a packaging and a corresponding package as well as corresponding uses and manufacturing methods that do not have the disadvantages mentioned above.

Another object of the invention is to provide a particularly ecological packaging, e.g., a particularly ecological coffee capsule.

Another object of the invention is to provide a packaging which is biodegradable, in particular compostable, more particularly home compostable.

Another object of the invention is to provide a packaging which, at least to a large extent, is recyclable, in particular recyclable in wastepaper recycling.

Another object of the invention is to provide a packaging which, at least to a large extent, is made of recycled materials, in particular made of wastepaper.

Another object of the invention is to provide a packaging, in particular a portion packaging, which withstands a brewing process and/or withstands pressures and/or temperatures present inside the packaging, in particular inside the portion packaging during a brewing process.

Another object of the invention is to provide a packaging which can be manufactured in a relatively simple way.

Another object of the invention is to provide a packaging which can be manufactured in a relatively economic way.

Another object of the invention is to provide a packaging and a package, respectively, which can be sealed, in particular sealed in an airtight manner, in a relatively economic way.

Furthermore, a corresponding package shall be provided, and corresponding methods for manufacturing a packaging and a packaging, respectively, shall be provided. In addition, a respective use of a compound material shall be provided. The package can in particular be a portion package, and the packaging can in particular be a portion packaging.

Further objects and various advantages emerge from the description and embodiments below.

At least one of these objects can be achieved in some implementations of devices and/or methods described in this disclosure.

The inventor proposes to use a particular **additive** in the pulp, namely a **water-soluble polymer material**. Accordingly, the pulp used in the pulp molding process comprises, besides water and a fibrous material such as wastepaper, also a water-soluble polymer material. The water-soluble polymer material can fill voids present in the fibrous material at the end of the pulp molding process which would exist in case of absense of the water-soluble polymer material. This way, airtight walls of the packaging can be obtained in a single process, namely in the pulp molding process. The otherwise porous structure of the molded material is closed by the water-soluble polymer material and is thus not porous anymore due to the water-soluble polymer material.

The fibrous material and the water-soluble polymer material can form a **composite material** with suitable properties, which can include the above-mentioned ecological properties and oxygen barrier as wells as vapor barrier properties and, in addition, also improved mechanical properties.

The **packaging** can in particular be a packaging for packaging an **extraction material** for preparation of a beverage from the extraction material and an extraction liquid. And the packaging can comprise a **first part** which comprises a **wall** of the packaging. And the wall can comprise a **composite material** produced in a **pulp molding process**. And the composite material can comprise
- a **fibrous material**; and
- a **water-soluble polymer material**.

This way, the packaging can be particularly environmentally friendly and, at the same time, suited for the purpose.

The packaging can in particular be a portion packaging and more particularly a capsule-type portion packaging.

The extraction material can in particular be ground coffee (coffee powder). And the extraction liquid can in particular be water, more particularly hot water. And the beverage can be coffee.

The first part of the packaging can be, e.g., a lid part or a main part. For example, the packaging can comprise (and essential be comprised of) a lid part and a main part. Those two can be bonded to one another, with the extraction material inside, so as to completely enclose (or to encapsulate) the extraction material.

The fibrous material can comprise and can essentially be, e.g., essentially cellulose fibers.

The fibrous material can comprise and can essentially be, e.g., recycled material, in particular wastepaper or material obtained from wastepaper, e.g., wastepaper fibers.

The fibrous material can comprise and can essentially be, e.g., renewable material, in particular renewable fibers, such as plant fibers, e.g., fibers from hay, straw, hemp or the like.

Particularly well suited water-soluble polymer materials are described further below.

In the composite material, the fibrous material and the water-soluble polymer material can be intermixed.

The composite material can be a solid material.

The wall can be, e.g., a top wall or a bottom wall or a side wall of the packaging.

In some embodiments, the wall, and in particular the first part, is essentially composed of the composite material, more particularly is comprised of the composite material by at least 80 % by weight, more particularly by at least 90 % by weight.

In some embodiments, the wall, and more particularly the first part, essentially is a layer system, and, e.g., the layer system is comprised of the composite material by at least 80 % by weight, more particularly by at least 90 % by weight. And optionally, a layer of the layer system can be essentially composed of the composite material, more particularly can be comprised of the composite material by at least 80 % by weight, more particularly by at least 90 % by weight.

In some embodiments, the composite material is **biodegradable** and in particular **compostable**. In particular, the packaging can be biodegradable and in particular compostable.

In the present disclosure, compostable can more specifically mean home compostable.

In the present disclosure, "biodegradable" can, more specifically, mean biologically degradable according to the European standard EN 13432 (more particularly:
EN 13432:2004). In addition, or as an alternative, it can mean biologically degradable according to the European standard EN 14995 (more particularly EN 14995:2006).
Thus "biodegradable" especially can refer to "biologically degradable" according to EN 13432 and/or according to EN 14995. In the present disclosure, "compostable" or
"home compostable" can, more specifically, mean compostable or home compostable according to the European standard EN 13432 (more particularly: EN 13432:2004) for packaging and/or according to the European standard EN14995 (more particularly EN 14995:2006) for plastics/synthetic materials.

In some embodiments, the composite material is **recyclable** and more particularly recyclable in wastepaper recycling. In particular, the packaging can be recyclable and, more particularly, recyclable in wastepaper recycling.

In some embodiments, the fibrous material is a cellulose-based fiber material, such as wastepaper fibers.

In some embodiments, the composite material comprises, in addition to the fibrous material and the water-soluble polymer material, further material which is recyclable and, more particularly, recyclable in wastepaper recycling. More particularly, the composite material is, to at least 90 % by weight, in particular to at least 95 % by weight, comprised of the fibrous material, the water-soluble polymer material and the further material.

In some embodiments, the packaging comprises, in addition to the fibrous material and the water-soluble polymer material, further material which is recyclable and, more particularly, recyclable in wastepaper recycling. More particularly, the packaging is, to at least 90 % by weight, in particular to at least 95 % by weight, comprised of the fibrous material, the water-soluble polymer material and the further material.

In some embodiments, the water-soluble polymer is cold soluble, meaning that the water-soluble polymer is soluble in cold water. Cold water in this regard can be water of a temperature of 40 °C or less, in particular of 38°C or less, more particularly of 35°C or less, most particularly of 30°C or less. Such a solubility in water can facilitate biodegradation and/or composting of the product. And it can facilitate an integration of the product in a paper recycling cycle, in particular in paper recycling according to DIN EN 13430 (as of the end of 2021, or DIN EN 13430:2004), DIN EN being a European standard.

In some embodiments, the fibrous material is comprised to a large extent, in particular to at least 90 % by weight, more particularly to at least 95 % by weight, of recycled material, e.g., of wastepaper fibers.

Accordingly, the packaging can be produced to a large extent, e.g., to at least 80 % by weight, from recycled materials, and can be recycled again after its use (for preparation of a beverage), e.g., in wastepaper recycling.

The provision of the water-soluble polymer material in the composite material can improve the properties of the packaging, while maintaining environmental compatibility, in particular when one or more of
- a poly(vinyl alcohol) (PVOH), in particular a vinyl-alcohol copolymer;
- a cellulose-ether polymer;
- a butenediol-vinylalcohol-copolymer (BVOH);
- an ethylene-vinylalcohol-copolymer (EVOH);
is used as the water-soluble polymer material.

In particular, the water-soluble polymer material can be one of
- a poly(vinyl alcohol) (PVOH), in particular a vinyl-alcohol copolymer;
- a cellulose-ether polymer;
- a butenediol-vinylalcohol-copolymer (BVOH);
- an ethylene-vinylalcohol-copolymer (EVOH).

For example, the cohesion of the composite material and of the wall can be particularly high due to the provision of the water-soluble polymer material, and/or a particularly flat or smooth surface of the packaging can result from the use of the water-soluble polymer material.

Furthermore, the water-soluble polymer material can function as an oxygen barrier and/or as a vapor barrier. This can be very valuable considering the fact that ground coffee is very sensitive to exposure to oxygen and to exposure to water and water vapor, respectively.

More specifically, the composite material in the wall and/or the wall can exhibit an **oxygen transmission rate (OTR),** at 23°C and a relative humidity of 50%, of at most 3 cm³/m² per day, in particular of at most 1 cm³/m² per day, more particularly of at most 0.2 cm³/m² per day. This can effect an increased shelf life of the packages.

Furthermore, the water-soluble polymer material can make possible to maintain environmental compatibility of the packaging (and of the corresponding package), at least to a high extent. E.g., the packaging (and the corresponding package) can be biodegradable or even compostable, despite of the water-soluble polymer material.

In some embodiments, the water-soluble polymer material comprises a poly(vinyl alcohol) (PVOH), more particularly the water-soluble polymer material is a poly(vinyl alcohol) (PVOH). The poly(vinyl alcohol) can in particular be a vinyl-alcohol copolymer. Properties of PVOH can be rather well adjusted; e.g., the water-solubility can be adjusted via ist degree of hydrolysis.

In some embodiments, the water-soluble polymer material comprises a cellulose-ether polymer, more particularly the water-soluble polymer material is a cellulose-ether polymer.

In some embodiments, the water-soluble polymer material comprises a butenediol-vinylalcohol-copolymer (BVOH), more particularly the water-soluble polymer material is a butenediol-vinylalcohol-copolymer (BVOH). BVOH can have a particularly good solubility, especially at high degrees of hydrolysis, such as close to or at 100%.

In some embodiments, the water-soluble polymer material comprises a ethylene-vinylalcohol-copolymer (EVOH), more particularly the water-soluble polymer material is an ethylene-vinylalcohol-copolymer (EVOH). EVOH can provide, especially at high ethylene contents, a particularly good oxygen barrier function, in particular at high humidities.

The water-soluble polymer, in particular the PVOH, can have a degree of hydrolysis of 70% to 99,9%. The degree of saponification can control the performance to the oxygen transmission barrier. A high saponification can, for instance, improve the oxygen transmission barrier performance.

Vinyl-alcohol containing polymer in the water soluble polymer material can comprise, e.g., more than 75%, in particular more than 90% monomer units carrying an OH unit each.

The **package** comprises a packaging as herein described in which the extraction material, in particular **ground coffee**, is contained. In particular, the packaging can enclose (or encapsulate) the extraction material in an airtight manner.

The package can in particular be **portion package**.

In other embodiments, the package can be a package containing at least one, in particular at least two portion packages, more particularly wherein each of the at least one and at least two, respectively, portion packages contain an extraction material, such as ground coffee.

Furthermore, we describe a **use** of a **composite material**, more particularly of the herein described composite material. The composite material is produced in a **pulp molding process** and comprises
- a **fibrous material**; and
- a **water-soluble polymer material**.

Optionally, one or more further additives can be comprised in the composite material, e.g., additives commonly used in prior art pulp molding processes, such as glues.

And said use is the use of this composite material for manufacturing a package, wherein the package contains an **extraction material** for preparation of a beverage from the extraction material and an **extraction liquid**.

More particularly, the use is the use of this composite material for manufacturing a portion package, wherein the portion package contains an **extraction material** for preparation of a beverage from the extraction material and an **extraction liquid** by piercing the portion package and **introducing** the **injection liquid** into the portion package and **discharging** a resulting brewing liquid from the portion package.

As has been pointed out, the composite material can be particularly suitable for packaging ground coffee in a particularly ecological way.

Turning now to **manufacturing methods**.

We disclose a **method** for manufacturing a **packaging** for packaging an **extraction material** for preparation of a beverage from the extraction material and an extraction liquid, wherein the packaging comprises a **first part**, and wherein the method comprises
- providing a **pulp**;
- carrying out a **pulp molding process** with the pulp to gain the first part or to gain a **precursor** of the first part;
wherein the pulp comprises
- **water**;
- a **fibrous material** present in the water, in particular suspended in the water; and
- a **water-soluble polymer material** present in the water, in particular dissolved in the water, more particularly solved in the water.

The packaging can be a packaging as herein described, in particular a portion package as herein described.

Pulp molding processes are well known in the art.

In case a precursor of the first part is produced in the pulp molding process, one or more subsequent processing steps can be applied to the precursor to gain the first part.

The fibrous material can form, in the water, a **pulp material** comprised in the pulp; and thus one can as well say in this case that the pulp comprises
- a **pulp material** comprising a **fibrous material** and **water**, in particular a fibrous material suspended in the water; and
- a **water-soluble polymer material** present in the water, in particular dissolved in the water, more particularly solved in the water.

In some embodiments, at least at the end of the pulp molding process, the water-soluble polymer material **adheres** to the fibrous material.

In some embodiments, the method comprises, during the pulp molding process,
- the fibrous material and the water-soluble polymer material forming a **composite material**.

In some embodiments, the first part comprises a **composite material** comprising the fibrous material and the water-soluble polymer material, and more particularly the first part comprises a **wall** of the packaging, and the wall comprises the composite material. For example, the wall can be essentially comprised of the composite material, e.g., the wall can be comprised of the composite material to at least 90 % by weight.

In some embodiments, the composite material, at least at the end of the pulp molding process, can form a **continuous wall body** which is **devoid of openings** extending through the wall body. The wall body can be generally shaped in accordance with a mold used in the pulp molding process - and thus can be generally shaped in accordance with the first part.

In some embodiments, the method comprises, during the pulp molding process,
- the fibrous material forming a **continuous piece**;
- the water-soluble polymer material forming a **continuous layer** which is **devoid of openings** extending through the layer and which is extended along the continuous piece, in particular extended along the full continuous piece.

Therein, the continuous piece can be generally shaped in accordance with a mold used in the pulp molding process - and thus can be generally shaped in accordance with the first part.

And furthermore, the continuous layer can be generally shaped in accordance with a mold used in the pulp molding process - and thus can be generally shaped in accordance with the first part.

In some embodiments, the pulp molding process comprises
- retrieving a **portion of the pulp**;
- shaping the portion of the pulp by means of a **mold** shaped in accordance with the first part, more particularly in accordance with a surface of the first part; in particular wherein the mold comprises a **mesh**;
- reducing a water content of the retrieved portion of the pulp.

These are basic steps of a pulp molding process. As has been explained, the provision of the water-soluble polymer material in the pulp makes the method and the packaging (and the package) special, in particular so as to enable the packaging of ground coffee or other sensitive products, more particularly oxygen- and/or vapor-sensitive products.

Retrieving the portion of the pulp can be accomplished, e.g., using the mold.

Reducing the water content can comprise, e.g., the application of heat to evaporate water from the portion of the pulp. Alternatively or in addition, application of a vacuum drawing water from the portion of the pulp can be applied for reducing the water content.

The **method** for manufacturing a **package** which comprises a packaging as herein described, can in particular comprise
- manufacturing a packaging as herein described, wherein the packaging comprises, in addition to the first part, a **second part**;
- introducing an **extraction material** into the first part and/or into the second part;
- **sealing** the packaging, in particular wherein the sealing comprises bonding the first part and the second part to one another.

Manufacturing the second part can, optionally, be a part of the method.

As has been pointed out, the packaging can in particular be a portion packaging, and the package can in particular be a portion package.

In some embodiments, the sealing (and the bonding, respectively) comprises application of a **bonding agent**, such as a glue, to the first part and/or to the second part. In particular, the bonding agent can be water-soluble, this way, the recyclability of the package (and of the packaging) may be unimpeded by the bonding agent.

In some embodiments, the sealing (and the bonding, respectively) comprises bonding the water-soluble polymer material (comprised in the first part and in the wall, respectively) to a **second water-soluble polymer material** which is comprised in the second part - wherein the two water-soluble polymer materials can optionally be identical to one another.

In particular, in case both these two water-soluble polymer materials are thermoplasts, the sealing can be facilitated, because for the saling (and the bonding, respectively), the two thermoplasts can be brought into contact with one another, and heat can be applied to accomplish the bonding between the two thermoplasts.

In some embodiments, the bonding comprises application of heat.

In some embodiments, the second part is manufactured according to one of the processes herein described for the first part. For example, the first and second parts can comprise the same fibrous material and the same water-soluble polymer material, and more particularly same composite material.

As will be readily understood, features mentioned herein with respect to a method can analogously apply for a described device (packaging or package) as well. And, vice versa, features mentioned herein with respect to a device can analogously apply for a described method as well. The achievable effects correspond to one another.

Further embodiments and advantages emerge from the following description and the enclosed figures and from the dependent claims.

Below, the invention is described in more detail by means of examples and the included drawings. In the drawings, same reference numerals refer to same or analogous elements. The figures show schematically:
- Fig. 1: an illustration of a capsule-type portion package;
- Fig. 2: a perspective view of a main part of the capsule-type portion package of Fig. 1;
- Fig. 3: a perspective view of a lid part of the capsule-type portion package of Fig. 1
- Fig. 4: a flow chart illustrating a manufacturing method.

The described embodiments are meant as examples or for clarifying the invention and shall not limit the invention.

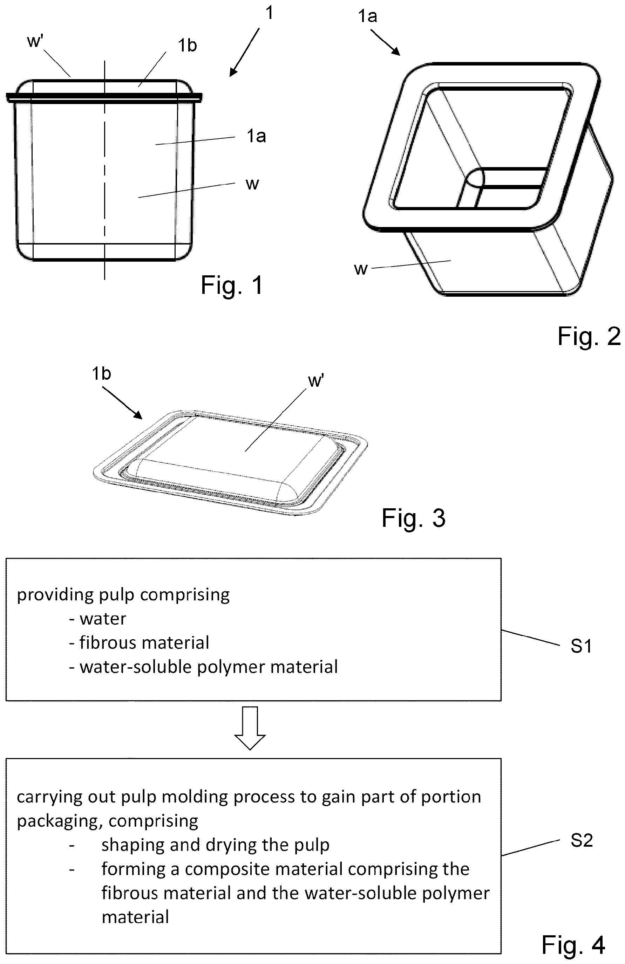

Fig. 1 shows an illustration of a capsule-type portion package 1 and, as well, of a capsule-type portion packaging. And Figs. 2 and 3 show a perspective view of a main part 1a and of a lid part 1b, respectively, of the portion package 1 (or portion packaging) of Fig. 1. The main part 1a comprises a wall w, and the lid part 1b comprises a wall w'.

The portion package 1 comprises an extraction material (not visible in the Figures), in particular ground coffee, encapsulated in the portion packaging, and can be used with a beverage preparation system such as with a coffee machine or espresso machine. Such a beverage preparation system can be equipped to prepare a beverage, e.g., coffee, from the extraction material and from an extraction liquid, e.g., water, by injecting the extraction liquid into the portion package- The beverage preparation machine can comprises a brewing chamber shaped to receive the portion package, with an outflow channel for the beverage, the beverage preparation machine comprising at least one piercing device for piercing the portion package, at a piercing location, when the portion package is in the brewing chamber, for the purpose of injecting the extraction liquid into the portion package and/or for allowing the beverage to flow out of the portion package.

Fig. 4 illustrates a manufacturing method, in particular a method for manufacturing a portion packaging. In step S1, pulp is provided, wherein the pulp comprises, in addition to water and fibrous material, also a water-soluble polymer material, such as PVOH.

Then, in step S2, a pulp molding process is carried out for producing the main part 1a or the lid part 1b - or for producing a precursor of one of these. The pulp is shaped (e.g., using a suitably shaped mesh) and dried. During the pulp molding process, a composite material comprising the fibrous material and the water-soluble polymer material is formed. The water-soluble polymer material can contribute to establishing void-free walls (such as walls w, w') by filling voids present between fibers of the fibrous material. The extraction material can be packaged in an airtight manner this way, and the walls can have suitable oxygen barrier and vapor barrier functionalities.

Both, the main part and the lid part, can be manufactured, in the described way, in such a pulp molding process.

The walls w, w' and in fact also the whole portion packaging, can be comprised, to at least 80 % by weight or even to at least 95 % by weight, of the composite material comprising the fibrous material and the water-soluble polymer material.

The portion packages and portion packagings can be very ecological. They can be manufactured, to a large extent, from recycled material, such as from wastepaper fibers comprised in the fibrous material. And they can be biodegradable, in particular compostable, and can be recyclable, e.g., in wastepaper recycling.

## Claims

1. A **packaging** for packaging an **extraction material** for preparation of a beverage from the extraction material and an extraction liquid, the packaging comprising a **first part** which comprises a **wall** of the packaging comprising a **composite material** produced in a **pulp molding process** and comprising
- a **fibrous material**; and
- a **water-soluble polymer material**.

2. The packaging according to claim 1, wherein the composite material is **biodegradable** and in particular **compostable**; in particular wherein the packaging is biodegradable and in particular compostable.

3. The packaging according to claim 1 or claim 2, wherein the composite material is **recyclable** and more particularly recyclable in wastepaper recycling; in particular wherein the packaging is recyclable and, more particularly, recyclable in wastepaper recycling.

4. The packaging according to one of claims 1 to 3, wherein the water-soluble polymer material comprises one or more of
- a poly(vinyl alcohol), in particular a vinyl-alcohol copolymer;
- a cellulose-ether polymer;
- a butenediol-vinylalcohol-copolymer;
- an ethylene-vinylalcohol-copolymer.

5. The packaging according to one of claims 1 to 4, the wall exhibiting an **oxygen transmission rate,** at 23°C and a relative humidity of 50%, of at most 3 cm³/m² per day, in particular of at most 1 cm³/m² per day, more particularly of at most 0.2 cm³/m² per day.

6. The packaging according to one of claims 1 to 5, wherein the packaging is a portion packaging.

7. A **package** comprising a packaging according to one of claims 1 to 6 in which an extraction material, in particular **ground coffee**, is contained, in particular the packaging enclosing the extraction material in an airtight manner.

8. **Use** of a **composite material** produced in a **pulp molding process** and comprising
- a **fibrous material**; and
- a **water-soluble polymer material**;
for manufacturing a package, the package containing an **extraction material** for preparation of a beverage from the extraction material and an **extraction liquid** , in particular wherein the package is a **portion package** for preparation of a beverage from the extraction material and an **extraction liquid** by piercing the portion package and **introducing** the **injection liquid** into the portion package and **discharging** a resulting brewing liquid from the portion package.

9. A **method** for manufacturing a **packaging** for packaging an **extraction material** for preparation of a beverage from the extraction material and an extraction liquid, in particular for manufacturing a packaging according to one of claims 1 to 6, the packaging comprising a **first part**, the method comprising
- providing a **pulp**;
- carrying out a **pulp molding process** with the pulp to gain the first part or to gain a **precursor** of the first part;
wherein the pulp comprises
- **water**;
- a **fibrous material** present in the water, in particular suspended in the water; and
- a **water-soluble polymer material** present in the water, in particular dissolved in the water, more particularly solved in the water.

10. The method according to claim 9, comprising, during the pulp molding process,
- the fibrous material and the water-soluble polymer material forming a **composite material**;
in particular wherein the composite material, at least at the end of the pulp molding process, forms a **continuous wall body** which is **devoid of openings** extending through the wall body.

11. The method according to claim 9 or 10, comprising, during the pulp molding process,
- the fibrous material forming a **continuous piece**;
- the water-soluble polymer material forming a **continuous layer** which is **devoid of openings** extending through the layer and which is extended along the continuous piece.

12. The method according to one of claims 9 to 11, the pulp molding process comprising
- retrieving a **portion of the pulp**;
- shaping the portion of the pulp by means of a **mold** shaped in accordance with the first part, in particular wherein the mold comprises a **mesh**;
- reducing a water content of the retrieved portion of the pulp.

13. A **method** for manufacturing a **package**, in particular a package according to claim 7 and/or a package comprising a packaging according to one of claims 1 to 6, the method comprising
- manufacturing a packaging according to one of claims 1 to 6, the packaging comprising, in addition to the first part, a **second part**;
- introducing an **extraction material** into the first part and/or into the second part;
- **sealing** the packaging, comprising bonding the first part and the second part to one another;
in particular wherein the package is a portion package.
